# EUROPEAN PATENT SPECIFICATION

(11) **EP 3 040 754 B1**
(45) Date of publication and mention of the grant of the patent: **27.03.2019**
(21) Application number: 14868677.7
(22) Date of filing: 19.11.2014
(51) Int. Cl.: G02B 7/28, G02B 7/32, G02B 7/40, G03B 13/36, H04N 5/232, G02B 7/36, H04N 5/235

(54) **IMAGING DEVICE, METHOD, AND PROGRAM**
BILDGEBUNGSVORRICHTUNG, -VERFAHREN UND -PROGRAMM
DISPOSITIF D'IMAGERIE, PROCÉDÉ ET LOGICIEL

(30) Priority: 03.12.2013 JP 2013250114
(43) Date of publication of application: 06.07.2016
(73) Proprietor: Sony Corporation, Tokyo 108-0075 (JP)
(72) Inventor: SHIMODA Tetsuya, Tokyo 108-0075 (JP)
(74) Representative: D Young & Co LLP
(86) International application number: PCT/JP2014/080575
(87) International publication number: WO 2015/083539

(56) References cited:
- JP-A- H07 167 646
- JP-A- 2005 233 985
- JP-A- 2006 208 818
- US-A- 5 589 910
- US-B1- 6 686 966

## Description

### Technical Field

The present technology relates to an imaging apparatus and method, and a program and, in particular, to an imaging apparatus and method, and a program, capable of focusing on a subject with higher accuracy.

### Background Art

In related art, when an object to be a subject is photographed, a technique of measuring the distance to the object is broadly classified into two modes, namely passive and active.

In the passive mode, the distance to a subject is calculated by performing the phase difference detection or the analysis of an image captured by a camera, thereby acquiring the information on the distance to the subject to perform an autofocus operation.

On the other hand, in the active mode, a subject, that is, a shooting target is irradiated with light, and the distance to the subject is calculated from the difference in time or the like between the irradiated light and the light reflected from the subject. Thus, the information on the distance to the subject is acquired, thereby performing an autofocus operation.

Such active mode autofocus and passive mode autofocus have their respective advantages and disadvantages.

For example, the passive mode autofocus has an advantage of being capable of performing an autofocus operation over a wide distance range from a short distance to a long distance. However, the passive mode autofocus has a disadvantage that it is no longer possible to achieve a fast and precise autofocus operation in low illuminance shooting environment, and if the illuminance is further lowered, it becomes unable to perform the autofocus operation itself.

On the other hand, the active mode autofocus has an advantage of being capable of performing a fast and precise autofocus operation in any challenging illuminance conditions at the time of shooting. However, in brighter shooting environment, the active mode is more advantageous than the passive mode.

As described above, such autofocus modes have their respective advantages and disadvantages, and thus there has developed techniques in which a plurality of autofocus modes are provided and the autofocus modes are switched to a suitable autofocus mode depending on the shooting condition.

An example of such techniques includes the technique for determining an autofocus mode that is optimal to the shooting condition in a selective or combined manner of two autofocus systems, namely phase-difference detection autofocus and contrast autofocus as the passive mode (e.g. Patent Literature 1).

### Citation List

### Patent Literature

Patent Literature 1: JP 2008-129174A
Other prior art is provided in US5589910A and US 6, 686, 966, 3.

### Summary of Invention

### Technical Problem

However, in the technique described above, the phase-difference detection autofocus and the contrast autofocus are both the passive mode autofocus. Thus, under low illuminance environment, the reliability of autofocus evaluation values is low, and the autofocus speed or autofocus accuracy decreases. Furthermore, under low illuminance environment, it will become unable to perform the autofocus operation itself. Then, an image captured by shooting is more likely to be an image in which its focus position is deviated.

The present technology has been made in view of these situations and is capable of focusing on a subject with higher accuracy.

### Solution to Problem

According to an aspect of the present technology, an imaging apparatus according to claim 1 is provided includes: a detector configured to detect a luminance level of a shooting environment; and a mode determination unit configured to compare the luminance level with a predetermined threshold to select any one of autofocusing using a passive mode or autofocusing using an active mode.

The imaging apparatus may further include: a calculator configured to calculate a shift amount of a lens in autofocusing using a mode selected by the mode determination unit.

The detector may calculate, as the luminance level, an average luminance of a captured image obtained by shooting a subject or an average luminance of a region in the captured image that includes the subject to be shot, based on the captured image.

The mode determination unit may select the autofocus using the passive mode when the luminance level is larger than the threshold, and select the autofocus using the active mode when the luminance level is less than or equal to the threshold.

The imaging apparatus may further include: a light emitting unit configured to irradiate the subject with irradiation light; and a range-image processing unit configured to detect light reception timing of the irradiation light based on a range image obtained by receiving the irradiation light reflected from the subject. The active mode calculator may calculate a shift amount of the lens using the active mode based on light emission timing of the irradiation light and the light reception timing.

The passive mode calculator may calculate a shift amount of the lens using the passive mode based on the captured image.

The detector may detect the luminance level for each frame of the captured image.

According to an aspect of the present technology, an imaging method or program is also provided.

### Advantageous Effects of Invention

According to an embodiment of the present technology, it is possible to focus on a subject with higher accuracy.

The advantageous effects described herein are not necessarily limited, but may be any effect described in the present disclosure.

### Brief Description of Drawings

FIG. 1 is a diagram illustrating an exemplary configuration of an imaging apparatus.
FIG. 2 is a diagram illustrated to describe the acquisition of range information in a case where light emission timing is AM modulated.
FIG. 3 is a diagram illustrated to describe the acquisition of range information in the case where light emission timing is pulse modulated.
FIG. 4 is a flowchart illustrated to describe a shooting process.
FIG. 5 is a diagram illustrating an example of transition of modes from active to passive.
FIG. 6 is a diagram illustrating an example of transition of modes from passive to active.
FIG. 7 is a diagram illustrating an exemplary configuration of the imaging apparatus.
FIG. 8 is a flowchart illustrated to describe a shooting process.
FIG. 9 is a diagram illustrating an exemplary configuration of a computer.

### Description of Embodiments

The description will be given of an embodiment to which the present technology is applied with reference to the accompanying drawings.

### <First Embodiment>

### <Exemplary Configuration of Imaging Apparatus>

An overview of the present technology will be first described.

The present technology has a mechanism that performs both autofocus modes, namely passive mode autofocus and active mode autofocus, and is intended to automatically select and employ an optimal autofocus mode depending on brightness of the shooting environment. Thus, even under low illuminance environment, it is possible to perform a high-speed and high-accuracy autofocus operation.

The passive mode is a mode that performs autofocus based on image information obtained by capturing a subject. In addition, the active mode is a mode that performs autofocus by using information obtained by irradiating a subject with predetermined irradiation light and by receiving reflected light of the irradiation light from the subject. The description will be given by taking, as an example, a case where the contrast autofocus is performed as the passive mode autofocus and time of flight (TOF) is performed as the active mode autofocus.

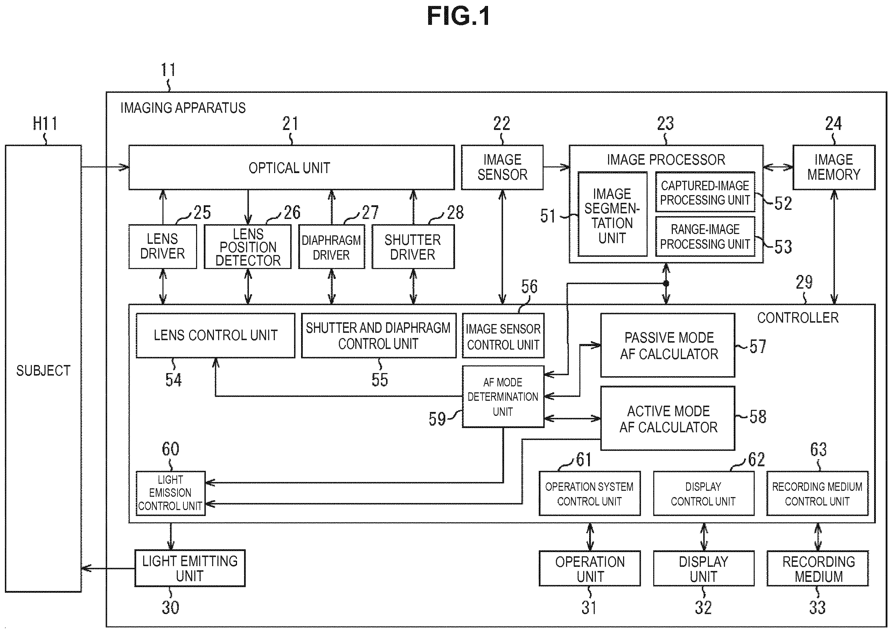

FIG. 1 is a diagram illustrating an exemplary functional configuration of one embodiment of an imaging apparatus to which the present technology is applied.

The imaging apparatus 11 may be, for example, digital still cameras, digital video cameras, multifunctional mobile phones, or the like.

The imaging apparatus 11 is configured to include an optical unit 21, an image sensor 22, an image processor 23, an image memory 24, a lens driver 25, a lens position detector 26, a diaphragm driver 27, a shutter driver 28, a controller 29, a light emitting unit 30, an operation unit 31, a display unit 32, and a recording medium 33.

The optical unit 21 is configured to include an imaging lens, a focus lens, a diaphragm, a shutter, or the like. The optical unit 21 guides light incident from a subject H11 to the image sensor 22.

The image sensor 22 may be a complementary metal oxide semiconductor (CMOS) imager or a charge-coupled device (CCD), which has an imaging plane on which pixels are arranged in a matrix form. The image sensor 22 has an imaging plane on which light coming from the subject H11 via the optical unit 21is received. The image sensor 22 outputs an image of the subject H11, which is obtained by performing photoelectric conversion on the light from the subject H11, to the image processor 23.

In this regard, the image sensor 22 has the imaging plane that is provided with a pixel for shooting a captured image of the subject H11 and a pixel, which is used in performing the active mode autofocus and used to measure the distance to the subject H11.

For example, the pixel for the captured image is a pixel provided with RGB color filters, and the pixel for the active mode autofocus, that is, the pixel for distance measurement is a pixel provided with a filter that transmits only near infrared light. The image obtained by performing photoelectric conversion on the light received using the pixel for the active mode autofocus is hereinafter also referred to as a range image.

In this way, the pixel for the captured image and the pixel for the range image coexist in a predetermined arrangement pattern on the imaging plane of the image sensor 22. Thus, the image obtained by the image sensor 22 contains the captured image and the range image.

The image processor 23 performs a process on the image supplied from the image sensor 22. The image processor 23 is configured to include an image segmentation unit 51, a captured-image processing unit 52, and a range-image processing unit 53.

The image segmentation unit 51 divides the image supplied from the image sensor 22 into the captured image and the range image. The image segmentation unit 51 supplies the captured image to the captured-image processing unit 52 and supplies the range image to the range-image processing unit 53.

The captured-image processing unit 52 performs camera signal processing, such as demosaicing, gamma correction, and color correction, on the captured image. In addition, the captured-image processing unit 52 detects the luminance level of the shooting environment, that is, the luminance level of the captured image for each frame, and performs a calculation process of adjusting international organization for standardization (ISO) sensitivity, that is, digital gain, or the like, thereby acquiring appropriate exposure for shooting the subject H11.

The luminance level of the captured image is, for example, the average luminance for each frame of the captured image or the average luminance in an autofocus frame. In this context, the average luminance in the autofocus frame is an average luminance of a region on the captured image, which contains a subject to be focused, that is, a subject to be photographed.

Furthermore, the captured-image processing unit 52 calculates a predetermined evaluation value corresponding to the contrast of the captured image. This evaluation value is used when the passive mode contrast autofocus is performed.

The range-image processing unit 53 acquires range information, that is, the light reception timing for each pixel from the range image.

The captured image or the range image supplied from the image processor 23 is temporarily recorded in the image memory 24. The image memory 24 supplies the recorded captured image or range image to the image processor 23 or the controller 29.

The lens driver 25 drives the focus lens in the optical unit 21 to perform the autofocus operation based on the information on an amount by which the focus lens is to be shifted that is provided from the lens control unit 54. The lens position detector 26 detects the current position of the focus lens in the optical unit 21 and conveys the information on the current position of the focus lens to the lens control unit 54.

The diaphragm driver 27 drives a diaphragm in the optical unit 21 based on diaphragm information from a shutter and diaphragm control unit 55. The shutter driver 28 drives a shutter in the optical unit 21 based on shutter information from the shutter and diaphragm control unit 55.

The controller 29 is configured to include, for example, a central processing unit (CPU), and the controller 29 controls the overall operation of the imaging apparatus 11. The controller 29 is configured to include the lens control unit 54, the shutter and diaphragm control unit 55, an image sensor control unit 56, a passive mode AF calculator 57, an active mode AF calculator 58, an AF mode determination unit 59, a light emission control unit 60, an operation system control unit 61, a display control unit 62, and a recording medium control unit 63.

The image sensor control unit 56 controls the image sensor 22 so that the exposure of the image sensor 22 and the read-out of a signal from a pixel is performed at predetermined timing.

The passive mode AF calculator 57 calculates a defocus amount from the current position of the focus lens, that is, the amount by which the focus lens is to be shifted to focus on the subject, based on the evaluation value of the contrast of the captured image that is calculated by the captured-image processing unit 52, and supplies it to the AF mode determination unit 59.

The active mode AF calculator 58 calculates the range for each pixel from light emission timing of the light emitting unit 30 by the light emission control unit 60 and range information for each pixel that is acquired by the range-image processing unit 53, that is, light reception timing, thereby generating a depth map.

Specifically, when the modulation scheme of the irradiation light emitted from the light emitting unit 30 is amplitude modulation (AM), that is, when the irradiation light is a sine wave, the active mode AF calculator 58 calculates the phase difference between the phase of the irradiation light and the phase of the received light for each pixel of the image sensor 22. The active mode AF calculator 58 calculates the distance to the subject H11 for each pixel from the calculated phase difference and generates a depth map that indicates each distance.

In addition, when the modulation scheme of the irradiation light emitted from the light emitting unit 30 is pulse modulation, the active mode AF calculator 58 calculates the phase difference between the light emission timing of the irradiation light and the light reception timing for each pixel by counting the number of pulses. The active mode AF calculator 58 calculates the distance to the subject H11 for each pixel from the calculated phase difference and generates a depth map.

The active mode AF calculator 58 calculates a defocus amount from the current position of the focus lens to the position of the focus lens to be focused on the subject H11, that is, the amount by the focus lens is to be shifted to focus on based on the depth map generated as described above, and supplies it to the AF mode determination unit 59.

The AF mode determination unit 59 compares the luminance level of the captured image detected by the captured-image processing unit 52 with the magnitude of a predetermined threshold th, and selects any one autofocus mode of the passive mode and the active mode.

In other words, if the luminance level is larger than the threshold th, the defocus amount calculated by the passive mode AF calculator 57, that is, the amount by which the focus lens is to be shifted is selected. On the other hand, if the luminance level is less than or equal to the threshold th, the defocus amount calculated by the active mode AF calculator 58, that is, the amount by which the focus lens is to be shifted is selected.

The AF mode determination unit 59 supplies the defocus amount, which is selected by comparison of the luminance level with the threshold th, to the lens control unit 54. In addition, when the active mode is selected, the AF mode determination unit 59 transmits a light emission ON signal to the light emission control unit 60.

The light emission control unit 60, when receiving the light emission ON signal from the AF mode determination unit 59, acquires a timing signal that indicates timing at which the light emitting unit 30 emits the irradiation light from the active mode AF calculator 58 and causes the light emitting unit 30 to emit light using AM modulation (sine wave) or pulse modulation. The light emitting unit 30 irradiates the subject H11 with, for example, near infrared light as irradiation light. The wavelength band of the irradiation light for distance measurement emitted from the light emitting unit 30 is not limited to the band of the near infrared light, but may include any wavelength band.

The operation unit 31 is an input unit used for the user (operator) to perform an operation on the imaging apparatus 11, such as shutter operation, zoom operation, and camera settings. The operation system control unit 61 performs the operation of the imaging apparatus 11 based on input information supplied from the operation unit 31 in response to the user operation.

The display unit 32 is a display device for displaying a photographed image, range image, shooting information, or the like, and is controlled by the display control unit 62. The recording medium 33 is a medium on which a still or moving image captured by the imaging apparatus 11 is recorded, and the recording medium control unit 63 controls the recording medium 33 to record and reproduce a photographed image or the like.

In the imaging apparatus 11 having the configuration as described above, the active mode autofocus is executed under the low illuminance environment, and thus AF auxiliary light is unnecessary. Accordingly, the imaging apparatus 11 is not provided with a light source for AF auxiliary light.

In addition, although the above description has been given of the example in which the contrast autofocus is performed as the passive mode autofocus, the passive mode autofocus is not limited thereto, but may be any other modes. For example, the autofocus may be achieved, as the passive mode autofocus, by triangulation, range finding, through-the-lens (TTL) phase difference detection, image plane phase difference detection, stereo technique, multi-camera technique, or the like.

Similarly, the active mode autofocus is also not limited to the TOF described above, but the autofocus may be achieved by light triangulation, structured light projection technique, photometric stereo technique, light section technique, grid projection technique, Moire technique, or the like.

### <Measurement of Distance to Subject>

The description will be given of a technique for measuring the distance from the imaging apparatus 11 to the subject H11 using TOF.

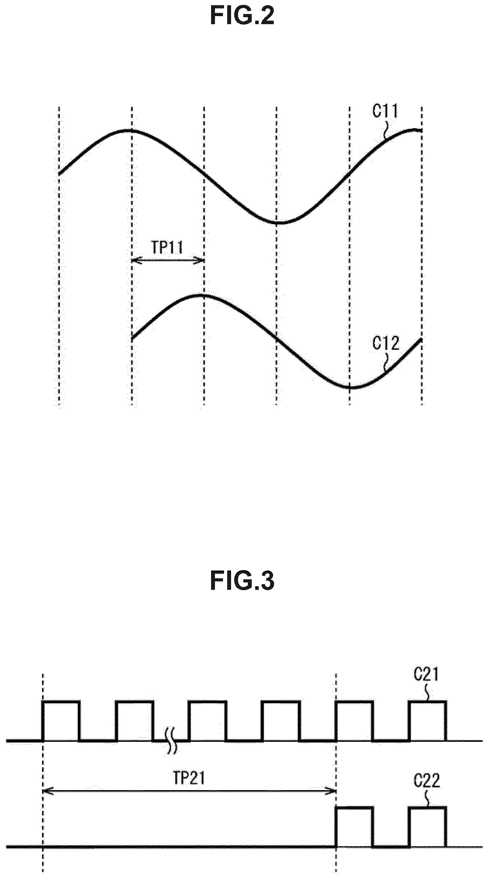

FIG. 2 illustrates a timing chart in the case where the timing signal supplied from the active mode AF calculator 58 to the light emission control unit 60, that is, the light emission timing of the light emitting unit 30 is AM modulated. In FIG. 2, the horizontal direction denotes time and the vertical direction denotes the intensity of irradiation light.

In FIG. 2, a curve C11 represents light emission timing indicated by a timing signal, and a curve C12 represents light reception timing at which the image sensor 22 receives the irradiation light.

In this example, the curve C11 is a sine wave, and thus the intensity of the irradiation light outputted from the light emitting unit 30 periodically varies with time. In other words, the light emission control unit 60 controls light emission of the light emitting unit 30 so that the intensity of the irradiation light emitted at each time becomes the intensity indicated by the curve C11.

The irradiation light emitted from the light emitting unit 30 in this way is reflected from the subject H11 and is incident on the imaging plane of the image sensor 22 via the optical unit 21. In this context, the irradiation light is near infrared light, and thus, among pixels on the imaging plane, a pixel for the captured image does not receive the irradiation light, but only a pixel for the range image receives the irradiation light.

The range image is an image obtained by capturing the irradiation light, which is emitted from the light emitting unit 30 and is reflected from the subject H11. Thus, when the intensity of the irradiation light varies periodically, the luminance value for each pixel on the range image also will vary with time to be corresponded to the change in the intensity of the irradiation light.

The light reception timing that is indicated by the curve C12 represents the timing at which the image sensor 22 receives the irradiation light reflected from the subject H11. In other words, the curve C12 represents the luminance value of a given pixel of the range image at each time (frame), that is, a change with time in the intensity of the irradiation light incident on the pixel for the range image on the imaging plane, which corresponds to the pixel of the range image.

Thus, the phase difference between the light emission timing indicated by the curve C11 and the light reception timing indicated by the curve C12 becomes a time of flight TP11 from when the irradiation light emitted from the light emitting unit 30 is reflected from the subject H11 to when the irradiation is received by the image sensor 22.

A method of calculating the distance from the image sensor 22 to the subject H11 will be described in detail.

In the example illustrated in FIG. 2, when the time of flight TP11 is a length of one-quarter of a wavelength of the sine wave as the timing signal and the sine wave has a frequency of 25 MHz, the time of flight is calculated as: TP11 = 1/4 × 1/(25 × 10⁶) × 10⁹ = 10 ns.

The time of flight TP11 is the round-trip time of light that is the time taken for the irradiation light to be emitted plus the time taken for the irradiation light reflected from the subject H11 to be received by the image sensor 22. Thus, the time taken for the irradiation light emitted from the light emitting unit 30 to reach the subject H11 becomes 5 ns that is the time of half of the time of flight TP11.

The speed of light is approximately 300000 km/s as well known, and thus the distance from the imaging apparatus 11 to the subject H11 becomes 1.5 m = 5 ns × 300000 km/s.

As described above, when the timing signal is AM modulated, the distance to the subject H11 can be calculated from the phase difference between the light emission timing and the light reception timing.

In addition, FIG. 3 illustrates a timing chart in the case where the timing signal supplied from the active mode AF calculator 58 to the light emission control unit 60, that is, the light emission timing of the light emitting unit 30 is pulse modulated. In FIG. 3, the horizontal direction denotes time and the vertical direction denotes the intensity of irradiation light.

In FIG. 3, a polygonal line C21 represents light emission timing indicated by a timing signal, and a polygonal line C22 represents light reception timing at which the image sensor 22 receives the irradiation light.

In this example, the polygonal line C21 is a rectangular wave signal composed of a pulse wave generated periodically, and thus the intensity of the irradiation light outputted from the light emitting unit 30 also periodically varies with time. In other words, the light emission control unit 60 controls light emission of the light emitting unit 30 so that the intensity of the irradiation light emitted at each time becomes the intensity indicated by the rectangular wave of the polygonal line C21.

The light reception timing indicated by the polygonal line C22 represents a timing at which the image sensor 22 receives the irradiation light that is reflected from the subject H11. In other words, the polygonal line C22 represents the luminance value of a given pixel of the range image at each time, that is, a change with time in the intensity of the irradiation light incident on the pixel for the range image on the imaging plane, which corresponds to the pixel of the range image.

Thus, the phase difference between the light emission timing indicated by the polygonal line C21 and the light reception timing indicated by the polygonal line C22 becomes a time of flight TP21 from when the irradiation light emitted from the light emitting unit 30 is reflected from the subject H11 until the irradiation is received by the image sensor 22.

A method of calculating the distance from the image sensor 22 to the subject H11 will be described in detail.

In the example illustrated in FIG. 3, when the time of flight TP21 is the time while 40 pulse waves of the timing signal are outputted and the pulse wave has a frequency of 400 MHz, the time of flight is calculated as: TP21 = 40 × 1/(400 × 10⁶) × 10⁶ = 0.1 µs.

The time of flight TP21 is the round-trip time of light that is the time taken for the irradiation light to be emitted plus the time taken for the irradiation light reflected from the subject H11 to be received by the image sensor 22. Thus, the time taken for the irradiation light emitted from the light emitting unit 30 to reach the subject H11 becomes 0.05 µs that is the time of half of the time of flight TP21.

The speed of light is approximately 300000 km/s, and thus the distance from the imaging apparatus 11 to the subject H11 becomes 15 m = 0.05 µs × 300000 km/s.

As described above, when the timing signal is pulse modulated, the distance from the imaging apparatus 11 to the subject H11 can be calculated by the time corresponding to the count value of the number of pulses between the light emission timing and the light reception timing.

### <Description of Shooting Process>

An operation of the imaging apparatus 11 will be described.

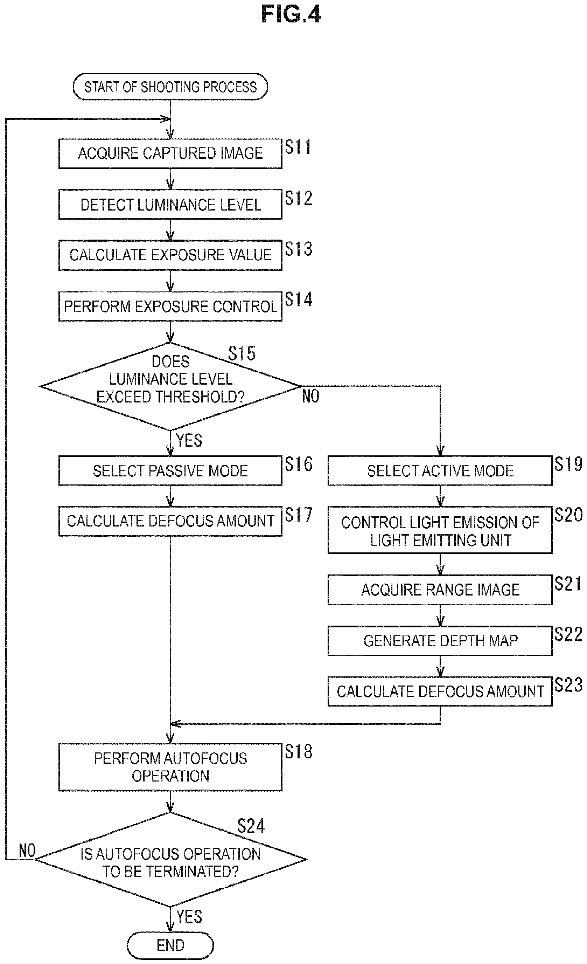

The shooting process to be performed by the imaging apparatus 11 will be described with reference to the flowchart of FIG. 4, which is not falling under the terms of the claims but useful for the understanding. This shooting process is started when the user operates the operation unit 31 and instructs the start of a shooting operation.

In step S11, the image sensor 22 receives the light coming from the subject H11 via the optical unit 21 at the imaging plane and converts the light into electrical signal, thereby acquiring a captured image. More specifically, the image sensor 22 supplies the acquired image to the image processor 23. The image segmentation unit 51 extracts the captured image from the image supplied from the image sensor 22 and supplies the extracted image to the captured-image processing unit 52.

In step S12, the captured-image processing unit 52 acquires appropriate exposure by detecting a luminance level of a frame to be processed, that is, the captured image that is newly supplied, based on the captured image supplied from the image segmentation unit 51.

For example, what is detected as the luminance level is the average luminance of the captured image, or the average luminance within the autofocus frame, that is, within the region including a subject to be focused on the captured image.

In step S13, the captured-image processing unit 52 calculates exposure value that is suitable for shooting based on the acquired luminance level of the captured image, that is, the value obtained by detecting the brightness of the subject and the shooting environment.

In step S14, the captured-image processing unit 52 performs exposure control based on the calculated exposure value. In other words, the captured-image processing unit 52 adjusts the ISO sensitivity (digital gain) based on the exposure value, and supplies the exposure value to the controller 29. Then, the shutter and diaphragm control unit 55 determines the f-number and shutter speed based on the exposure value. Then, the shutter and diaphragm control unit 55 causes the diaphragm driver 27 to drive a diaphragm in the optical unit 21 based on the determined f-number and causes the shutter driver 28 to drive a shutter in the optical unit 21 based on the determined shutter speed, thereby performing an appropriate exposure control.

In addition, the captured-image processing unit 52 supplies the luminance level of the captured image that is calculated in step S12 to the AF mode determination unit 59.

In step S15, the AF mode determination unit 59 compares the luminance level supplied from the captured-image processing unit 52 with the predetermined threshold th, and determines whether the luminance level exceeds the threshold th. For example, if the luminance level exceeds the threshold th, then the passive mode is selected. If the luminance level is less than or equal to the threshold th, the active mode is selected.

In setting the threshold th, when the luminance level becomes less than or equal to the threshold th, the luminance level value that does not make full use of the autofocus performance becomes the threshold th in the passive mode.

If it is determined in step S15 that the luminance level exceeds the threshold th, the AF mode determination unit 59 selects the passive mode in step S16. Then, the AF mode determination unit 59 instructs the captured-image processing unit 52 to execute a process that is necessary for the contrast autofocus that is the passive mode.

The captured-image processing unit 52 calculates a value indicating the strength of the contrast for each region of the captured image as an evaluation value corresponding to the contrast of the captured image according to the instruction from the AF mode determination unit 59, and supplies it to the passive mode AF calculator 57. In addition, the AF mode determination unit 59 instructs the passive mode AF calculator 57 to calculate a defocus amount of the focus lens using the contrast autofocus that is the passive mode.

In step S17, the passive mode AF calculator 57 calculates the defocus amount of the focus lens included in the optical unit 21 based on the evaluation value supplied from the captured-image processing unit 52 according to the instruction from the AF mode determination unit 59, and supplies it to the AF mode determination unit 59.

In step S18, the AF mode determination unit 59 supplies the defocus amount supplied from the passive mode AF calculator 57 to the lens control unit 54 to perform the autofocus operation.

The lens control unit 54 controls the lens driver 25 based on the defocus amount supplied from the AF mode determination unit 59 so that the lens driver 25 drives the focus lens in the optical unit 21, thereby focusing on a target subject.

In addition, if it is determined in step S15 that the luminance level is less than or equal to the threshold th, the AF mode determination unit 59 selects the active mode in step S19. Then, the AF mode determination unit 59 instructs the range-image processing unit 53 and the active mode AF calculator 58 to execute a process necessary for the TOF mode autofocus as the active mode.

In addition, the AF mode determination unit 59 supplies the light emission ON signal used for the light emitting unit 30 to emit light to the light emission control unit 60, and the active mode AF calculator 58 supplies the timing signal used for the light emitting unit 30 to emit light to the light emission control unit 60.

The timing signal used for the light emitting unit 30 to emit light may be modulated by using any scheme of AM modulation and pulse modulation, or the AM modulation and the pulse modulation may be used by switching them from one to another.

In step S20, the light emission control unit 60 controls the light emission of the light emitting unit 30 based on the light emission ON signal from the AF mode determination unit 59 and the timing signal from the active mode AF calculator 58. The light emitting unit 30 emits light and irradiates the subject H11 with the irradiation light, according to the control of the light emission control unit 60.

Then, the irradiation light emitted from the light emitting unit 30 is reflected from the subject H11 and is incident on the image sensor 22 via the optical unit 21.

In step S21, the image sensor 22 receives the irradiation light coming from the subject H11 via the optical unit 21 and converts the light into electrical signal, and thus acquires a range image. More specifically, the image sensor 22 supplies the acquired image to the image processor 23. The image segmentation unit 51 extracts the range image from the image supplied from the image sensor 22 and supplies the extracted range image to the range-image processing unit 53.

In addition, the range-image processing unit 53 obtains range information for each pixel, that is, the light reception timing based on the change in the time direction of the luminance value for each pixel of the range image supplied from the image segmentation unit 51, and supplies it to the active mode AF calculator 58. Further, the AF mode determination unit 59 instructs the active mode AF calculator 58 to calculate a defocus amount of the focus lens using the TOF technique that is the active mode.

In step S22, the active mode AF calculator 58 generates a depth map according to the instruction from the AF mode determination unit 59 based on the light reception timing supplied from the range-image processing unit 53 and the light emission timing of the light emitting unit 30 that is controlled by the light emission control unit 60.

In other words, the active mode AF calculator 58 calculates the time of flight from the phase difference between the light emission timing and the light reception timing or the number of pulses corresponding to the phase difference and calculates the distance to the subject H11 for each pixel of the range image. Thus, the active mode AF calculator 58 generates the depth map indicating the distance for each region of the range image.

In step S23, the active mode AF calculator 58 obtains the distance to a target subject based on the generated depth map and calculates the defocus amount to be supplied to the AF mode determination unit 59.

Then, in step S18 following step S23, the AF mode determination unit 59 supplies the defocus amount, which is supplied from the active mode AF calculator 58, to the lens control unit 54 to perform the autofocus operation.

The lens control unit 54 controls the lens driver 25 based on the defocus amount supplied from the AF mode determination unit 59 so that the lens driver 25 drives the focus lens in the optical unit 21, thereby focusing on a target subject.

In this way, when the autofocus operation using the passive mode or the active mode is performed, the controller 29 determines whether the autofocus operation is to be terminated in step S24. For example, when the user presses a shutter button serving as the operation unit 31 and it is instructed to shoot a captured image, the autofocus operation is determined to be terminated.

If it is determined in step S24 that the autofocus operation is not terminated, the process returns to step S11 and the above-described process is repeated.

On the other hand, if it is determined in step S24 that the autofocus operation is terminated, the shooting process is terminated.

For example, when the shooting of the captured image is instructed and if it is determined that the autofocus operation is terminated, the captured image that is appropriately processed by the captured-image processing unit 52 is supplied to the recording medium 33 and recorded thereon or is supplied to the display unit 32 and displayed thereon.

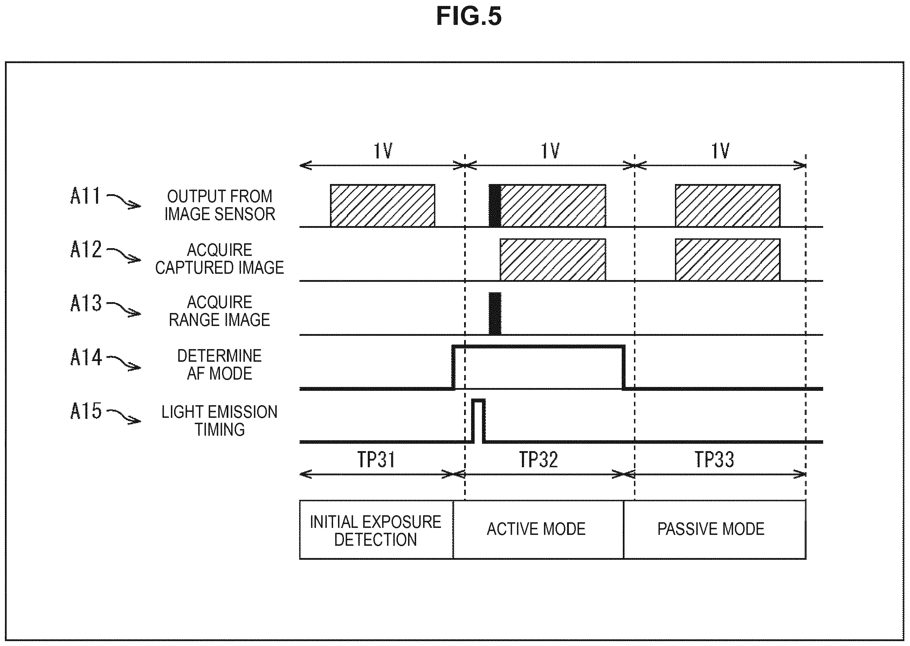

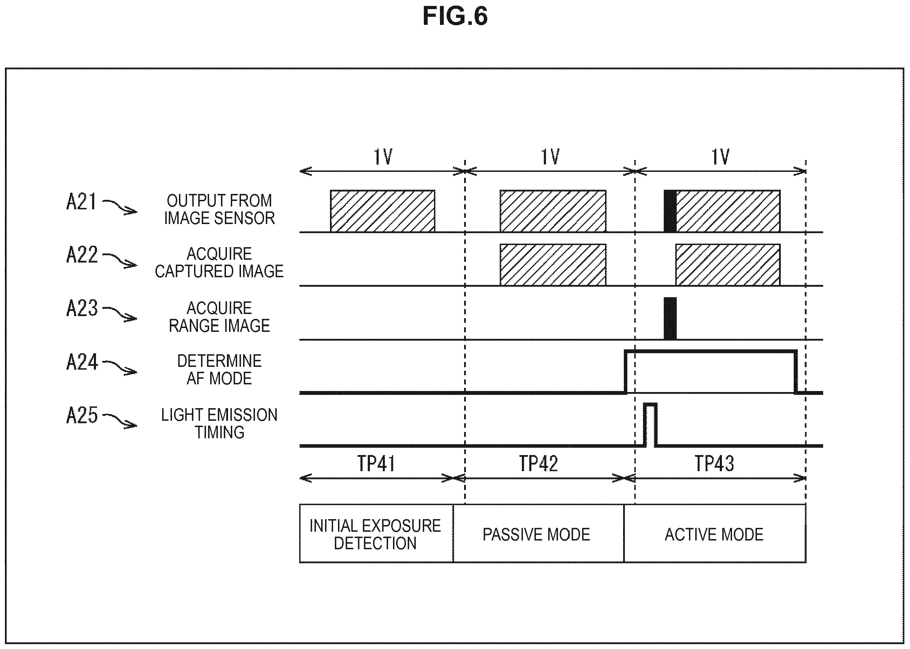

The operation timing of the imaging apparatus 11 will be described with reference to timing charts of FIGS. 5 and 6.

In FIGS. 5 and 6, the horizontal direction in the drawings denotes time. In addition, the uppermost stages, that is, the stages indicated by arrows A11 and A21 each represents an image outputted from the image sensor 22. Particularly, in the uppermost stage, the rectangular with hatched pattern represents a captured image, and the rectangular with no hatched pattern represents a range image.

In addition, the period denoted as "IV", that is, the periods TP31 to TP33 and the periods TP41 to TP 43 represent one vertical period, that is, a period of time that it takes to acquire an image of one frame.

In FIGS. 5 and 6, the second stages, that is, the stages indicated by arrows A12 and A22 each represents a timing at which the captured-image processing unit 52 acquires a captured image for recording or displaying. The rectangular with hatched pattern denoted in the second stage represents a captured image acquired by the captured-image processing unit 52.

In addition, the third stages, that is, the stages indicated by arrows A13 and A23 each represents a timing at which the range-image processing unit 53 acquires a range image. The rectangular with hatched pattern denoted in the third stage represents a range image acquired by the range-image processing unit 53.

The fourth stages, that is, the stages indicated by arrows A14 and A24 each represents a result obtained from the determination by the AF mode determination unit 59, that is, which mode is selected for autofocusing. More specifically, the period denoted by the fourth stage in which the rectangular waveform projects upward represents the period in which the active mode is selected as the autofocus mode. The period in which the rectangular waveform projects downward represents the period in which the passive mode is selected.

Furthermore, the fifth stages, that is, the stages indicated by arrows A15 and A25 each represents light emission timing, that is, a timing at which the light emission ON signal is outputted. More specifically, the period denoted by the fifth stage in which the rectangular waveform projects upward represents the period in which the light emission ON signal is outputted and the light emitting unit 30 emits light. The period in which the rectangular waveform projects downward represents the period in which the light emission ON signal is not outputted and the light emitting unit 30 does not emit light.

FIG. 5 illustrates a timing chart in the case where mode transition is performed from the active mode to the passive mode after the shooting operation is started.

First, in the initial exposure detection period TP31, the image sensor 22 outputs a captured image at the output timing, and the captured-image processing unit 52 detects the luminance level of the captured image.

Then, at the timing of the AF mode determination, the AF mode determination unit 59 compares the luminance level with a threshold, and selects an autofocus mode. In the example of FIG. 5, the shooting is performed under low illuminance environment, and thus the AF mode determination unit 59 selects the active mode.

In the active mode AF period TP32 following the initial exposure detection period TP31, the AF mode determination unit 59 supplies the light emission ON signal to the light emission control unit 60 at the light emission timing, and the active mode AF calculator 58 supplies the light emission timing signal to the light emission control unit 60 at the light emission timing. The light emission control unit 60, when receiving the light emission ON signal and the light emission timing signal, allows the light emitting unit 30 to emit light at the light emission timing and to irradiate the subject H11 with the irradiation light.

In addition, the image sensor 22 receives the light reflected from the subject H11 and converts the light into electrical signal, and then outputs the captured image and the range image to the image processor 23 at the output timing.

The image segmentation unit 51 divides the images into the captured image and the range image. Then, the captured-image processing unit 52 acquires the captured image at the timing of acquiring the captured image. The range-image processing unit 53 acquires the range image, that is, the light reception timing for each pixel of the range image, at the timing of acquiring the range image.

The active mode AF calculator 58 calculates the time of flight from the phase difference between the light emission timing and the light reception timing of the light emitting unit 30 controlled by the light emission control unit 60 or the number of pulses, and generates a depth map indicating the distance to the subject H11 for each pixel of the range image. Further, the active mode AF calculator 58 obtains the distance to the subject H11 based on the generated depth map to calculate the defocus amount.

The AF mode determination unit 59 supplies the defocus amount calculated by the active mode AF calculator 58 to the lens control unit 54. The lens control unit 54 controls the lens driver 25 based on the defocus amount to cause the focus lens in the optical unit 21 to be driven, thereby performing the autofocus operation.

In addition, the captured-image processing unit 52 detects a luminance level of the captured image. The AF mode determination unit 59 compares the luminance level with a threshold at the timing of the AF mode determination, and selects the autofocus mode. In this example, the illuminance of the shooting environment varies from low to high, and thus the AF mode determination unit 59 selects the passive mode.

Moreover, in the passive mode AF period TP33, the AF mode determination unit 59 does not output the light emission ON signal as shown at the light emission timing of the fifth stage. In other words, the light emitting unit 30 does not emit light.

In addition, the image sensor 22 outputs the captured image to the image processor 23 at the output timing. The captured-image processing unit 52 acquires the captured image at the timing of acquiring the captured image. The captured-image processing unit 52 calculates an evaluation value corresponding to the contrast of the captured image. The passive mode AF calculator 57 calculates a defocus amount based on the evaluation value.

The AF mode determination unit 59 supplies the defocus amount calculated by the passive mode AF calculator 57 to the lens control unit 54. The lens control unit 54 controls the lens driver 25 based on the defocus amount to cause the focus lens in the optical unit 21 to be driven, thereby performing the autofocus operation.

In addition, FIG. 6 illustrates a timing chart in the case where mode transition is performed from the passive mode to the active mode after the shooting operation is started.

First, in the initial exposure detection period TP41, the image sensor 22 outputs a captured image at the output timing, and the captured-image processing unit 52 detects the luminance level of the captured image.

In addition, at the timing of the AF mode determination, the AF mode determination unit 59 compares the luminance level with a threshold, and selects an autofocus mode. In the example of FIG. 6, the shooting is performed in high illuminance environment, and thus the AF mode determination unit 59 selects the passive mode.

In the passive mode AF period TP42 following the initial exposure detection period TP41, the AF mode determination unit 59 does not output the light emission ON signal as shown in the light emission timing of the fifth stage. In other words, the light emitting unit 30 does not emit light.

In addition, the image sensor 22 outputs the captured image to the image processor 23 at the output timing. The captured-image processing unit 52 acquires the captured image at the timing of acquiring the captured image.

The captured-image processing unit 52 calculates an evaluation value corresponding to the contrast of the captured image, and the passive mode AF calculator 57 calculates a defocus amount based on the evaluation value. The AF mode determination unit 59 supplies the defocus amount calculated by the passive mode AF calculator 57 to the lens control unit 54. The lens control unit 54 controls the lens driver 25 based on the defocus amount to cause the focus lens in the optical unit 21 to be driven, thereby performing the autofocus operation.

Furthermore, the captured-image processing unit 52 detects a luminance level of the captured image. The AF mode determination unit 59 compares the luminance level with a threshold at the timing of the AF mode determination to select an autofocus mode.

In this example, the illuminance of the shooting environment varies from high to low, and thus the AF mode determination unit 59 selects the active mode.

Then, in the active mode AF period TP43, the AF mode determination unit 59 supplies the light emission ON signal to the light emission control unit 60 at the light emission timing. The active mode AF calculator 58 supplies the light emission timing signal to the light emission control unit 60 at the light emission timing. The light emission control unit 60, when receiving the light emission ON signal and the light emission timing signal, causes the light emitting unit 30 to emit light at the light emission timing and to irradiate the subject H11 with the irradiation light.

In addition, the image sensor 22 receives the light reflected from the subject H11 and converts the light into electrical signal, and then outputs the captured image and the range image to the image processor 23 at the output timing.

The image segmentation unit 51 divides the images into the captured image and the range image. Then, the captured-image processing unit 52 acquires the captured image at the timing of acquiring the captured image. The range-image processing unit 53 acquires the range image, that is, the light reception timing for each pixel of the range image, at the timing of acquiring the range image.

The active mode AF calculator 58 calculates the time of flight from the phase difference between the light emission timing and the light reception timing of the light emitting unit 30 controlled by the light emission control unit 60 or the number of pulses, and generates a depth map indicating the distance to the subject H11 for each pixel of the range image. Further, the active mode AF calculator 58 obtains the distance to the subject H11 based on the generated depth map, and calculates the defocus amount.

The AF mode determination unit 59 supplies the defocus amount calculated by the active mode AF calculator 58 to the lens control unit 54. The lens control unit 54 controls the lens driver 25 based on the defocus amount to cause the focus lens in the optical unit 21 to be driven, thereby performing the autofocus operation.

As described above, the imaging apparatus 11 compares the luminance level of the captured image with a threshold, and performs a shooting operation by switching the passive mode autofocus and the active mode autofocus as appropriate depending on the result obtained by the comparison.

Therefore, the optimum autofocus mode is employed automatically depending on the brightness of the shooting environment, and thus it is possible to achieve the high-speed and high-accuracy autofocus operation in any shooting environment. In other words, it is possible to focus on a subject with higher accuracy at higher speed.

In particular, even when the focus performance in the passive mode deteriorates under low illuminance environment, the imaging apparatus 11 employs the active mode automatically, and thus it is possible to achieve the high-speed and high-accuracy autofocus operation as if it is in high illuminance environment.

In addition, the imaging apparatus 11 is necessary to be provided with the light emitting unit 30 to emit light necessary for the active mode autofocus, but the imaging apparatus 11 eliminates the necessity of a light emitting unit for AF auxiliary light necessary for shooting in the passive mode autofocus under low illuminance environment in related art. This prevents the imaging apparatus 11 from increasing in size.

Furthermore, according to the imaging apparatus 11, even under low illuminance environment, the use of active mode allows the autofocus operation to function without use of AF auxiliary light. It becomes possible to achieve the moving image recording and shooting under low illuminance environment, which cannot be obtained by the passive mode using AF auxiliary light in related art.

### <Second Embodiment>

### <Exemplary Configuration of Imaging Apparatus>

In the above, the description has been given of the example in which the AF mode determination unit 59 selects any one of the passive mode or the active mode, and any one of the passive mode AF calculator 57 or the active mode AF calculator 58 depending on the result obtained by the selection calculates the defocus amount according to the instruction of the AF mode determination unit 59. However, prior to the selection of any one of the passive mode or the active mode, the defocus amount may be calculated using each mode and the AF mode determination unit 59 may select one of the passive mode or the active mode, thereby outputting the defocus amount determined using the selected mode.

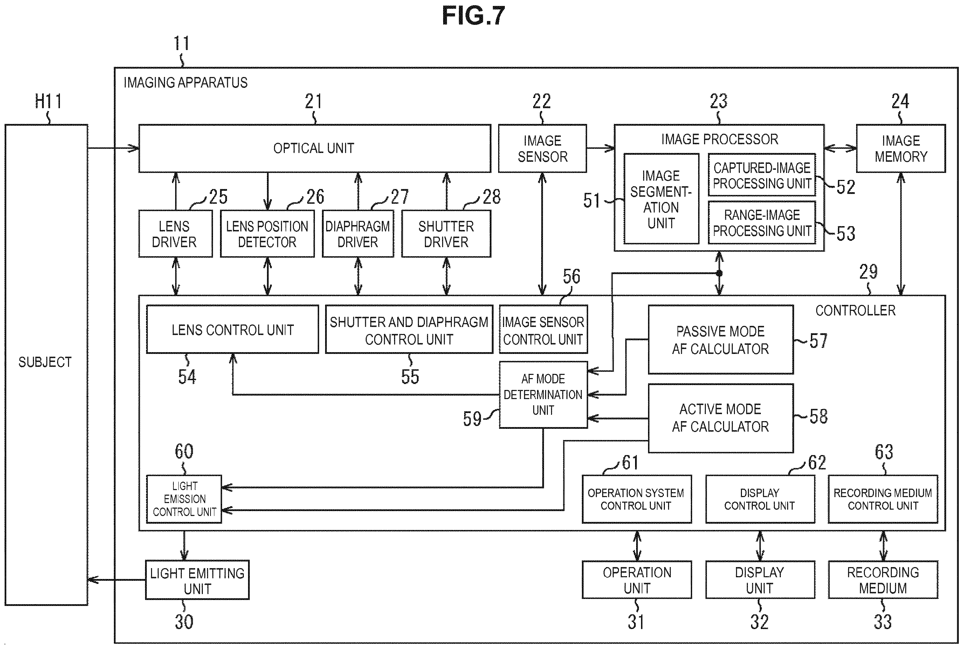

In such a case, the imaging apparatus 11 is configured as illustrated in FIG. 7. The components that correspond to those of FIG. 1 are denoted with the same reference signs, and the description thereof is omitted as appropriate.

The imaging apparatus 11 illustrated in FIG. 7 is configured to include an optical unit 21, an image sensor 22, an image processor 23, an image memory 24, a lens driver 25, a lens position detector 26, a diaphragm driver 27, a shutter driver 28, a controller 29, a light emitting unit 30, an operation unit 31, a display unit 32, and a recording medium 33.

In the imaging apparatus 11 illustrated in FIG. 1, the AF mode determination unit 59 instructs the passive mode AF calculator 57 or the active mode AF calculator 58 to calculate the defocus amount. The defocus amount calculated according to the instruction is supplied from the passive mode AF calculator 57 or the active mode AF calculator 58 to the AF mode determination unit 59.

On the other hand, in the imaging apparatus 11 illustrated in FIG. 7, the defocus amounts calculated by the passive mode AF calculator 57 and the active mode AF calculator 58 are each supplied to the AF mode determination unit 59. The AF mode determination unit 59 supplies any one of these defocus amounts to the lens control unit 54 depending on the result obtained by the selection of the passive mode or the active mode.

### <Exemplary Configuration of Imaging Apparatus>

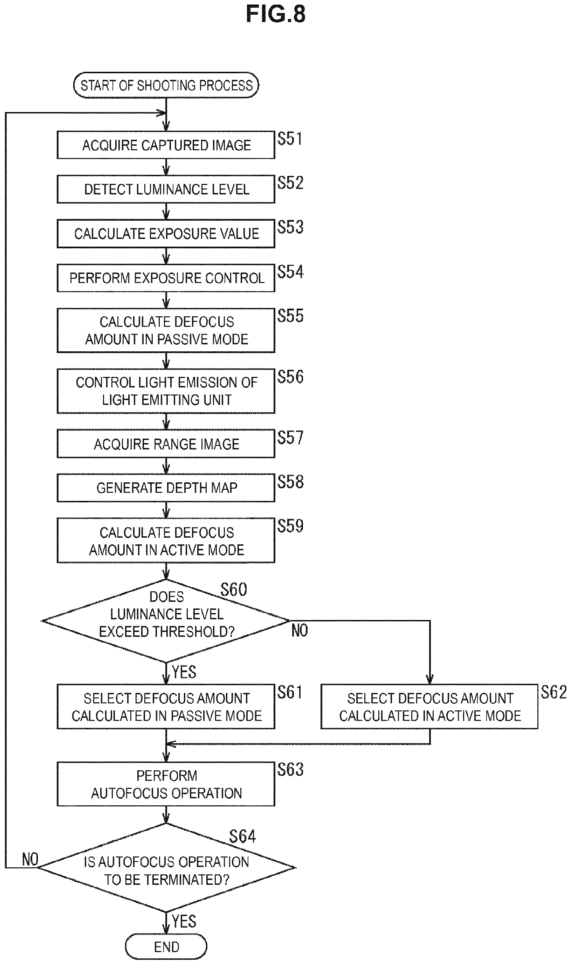

The shooting process to be performed by the imaging apparatus 11 illustrated in FIG. 7 will be described with reference to the flowchart of FIG. 8.

The process in steps S51 to S54 is similar to that in step S11 to S14 of FIG. 4, and thus the description thereof is omitted.

When the exposure control is performed in the process of step S54, the passive mode AF calculator 57 calculates a defocus amount using the passive mode in step S55.

In other words, the captured-image processing unit 52 calculates a value indicating the strength of the contrast for each region of the captured image as an evaluation value corresponding to the contrast of the captured image, and supplies the value to the passive mode AF calculator 57. The passive mode AF calculator 57 calculates a defocus amount of the focus lens included in the optical unit 21 based on the evaluation value supplied from the captured-image processing unit 52, and supplies the defocus amount to the AF mode determination unit 59.

When the defocus amount is calculated using the passive mode, then the process of steps S56 to S59 is performed to calculate the defocus amount using the active mode.

In other words, in step S56, the AF mode determination unit 59 supplies the light emission ON signal, which is used for the light emitting unit 30 to emit light, to the light emission control unit 60, and the active mode AF calculator 58 supplies the timing signal used for the light emitting unit 30 to emit light to the light emission control unit 60.

The light emission control unit 60 controls the light emission of the light emitting unit 30 based on the light emission ON signal from the AF mode determination unit 59 and the timing signal from the active mode AF calculator 58. The light emitting unit 30 emits light according to the control of the light emission control unit 60 and irradiates the subject H11 with the irradiation light.

In step S57, the image sensor 22 receives the irradiation light coming from the subject H11 via the optical unit 21 and converts the light into electrical signal, and thus acquires a range image. More specifically, the image sensor 22 supplies the acquired image to the image processor 23. The image segmentation unit 51 extracts the range image from the image supplied from the image sensor 22 and supplies the extracted range image to the range-image processing unit 53.

In addition, the range-image processing unit 53 determines range information for each pixel, that is, the light reception timing based on the change in the time direction of the luminance value for each pixel of the range image supplied from the image segmentation unit 51, and supplies it to the active mode AF calculator 58.

In step S58, the active mode AF calculator 58 generates a depth map based on the light reception timing supplied from the range-image processing unit 53 and the light emission timing of the light emitting unit 30 that is controlled by the light emission control unit 60.

In step S59, the active mode AF calculator 58 calculates the defocus amount using the active mode. More specifically, the active mode AF calculator 58 obtains the distance to a target subject based on the generated depth map and calculates the defocus amount to be supplied to the AF mode determination unit 59.

In step S60, the AF mode determination unit 59 compares the luminance level supplied from the captured-image processing unit 52 with the predetermined threshold th, and determines whether the luminance level exceeds the threshold th.

If it is determined in step S60 that the luminance level exceeds the threshold th, the AF mode determination unit 59 selects the defocus amount calculated using the passive mode, that is, the defocus amount calculated by the passive mode AF calculator 57, in step S61. Then, the AF mode determination unit 59 supplies the defocus amount, which is supplied from the passive mode AF calculator 57, to the lens control unit 54. The process proceeds to step S63.

On the other hand, if it is determined in step S60 that the luminance level is less than or equal to the threshold th, the AF mode determination unit 59 selects the defocus amount calculated using the active mode, that is, the defocus amount calculated by the active mode AF calculator 58, in step S62. Then, the AF mode determination unit 59 supplies the defocus amount, which is supplied from the active mode AF calculator 58, to the lens control unit 54. The process proceeds to step S63.

When the process of step S61 or S62 is performed, then the process of steps S63 and S64 is performed and the shooting process is terminated. However, these processes are similar to those of steps S18 and S24 in FIG. 4, and thus the description thereof is omitted.

As described above, the imaging apparatus 11 calculates the defocus amount using both the passive mode and the active mode, compares the luminance level of the captured image with a threshold, and selects the defocus amount calculated using any one of the passive mode or the active mode as appropriate depending on the result obtained by the comparison. The imaging apparatus 11 executes the autofocus based on the selected defocus amount to shoot an image.

Therefore, an optimum autofocus mode is employed automatically depending on the brightness of the shooting environment, and thus it is possible to achieve a high-speed and high-accuracy autofocus operation in any shooting environment. In other words, it is possible to focus on a subject with higher accuracy at higher speed.

The series of processes described above can be executed by hardware but can also be executed by software. When the series of processes is executed by software, a program that constructs such software is installed into a computer. Here, the expression "computer" includes a computer in which dedicated hardware is incorporated and a general-purpose computer or the like that is capable of executing various functions when various programs are installed.

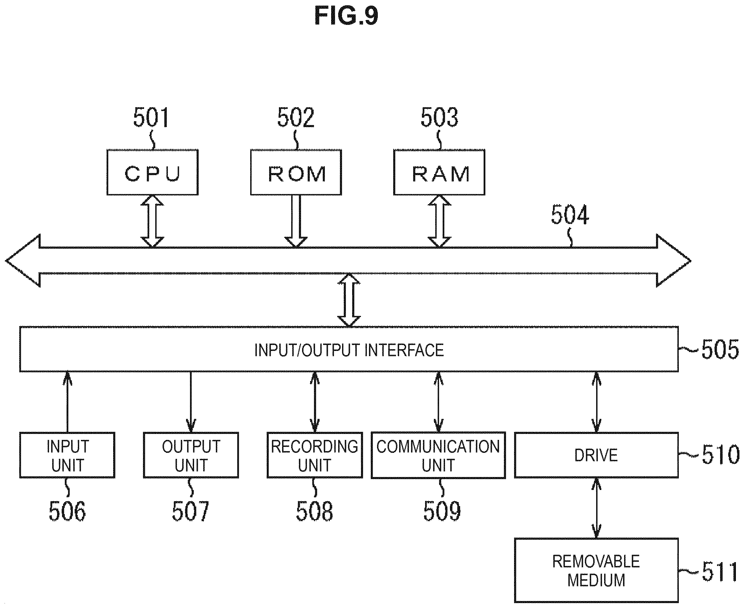

FIG. 9 is a block diagram showing an example configuration of the hardware of a computer that executes the series of processes described earlier according to a program.

In a computer, a CPU 501, a read only memory (ROM) 502, and a random access memory (RAM) 503 are mutually connected through a bus 504.

An input/output interface 505 is also connected to the bus 504. An input unit 506, an output unit 507, a recording unit 508, a communication unit 509, and a drive 510 are connected to the input/output interface 505.

The input unit 506 is configured from a keyboard, a mouse, a microphone, an imaging element or the like. The output unit 507 configured from a display, a speaker or the like. The recording unit 508 is configured from a hard disk, a nonvolatile memory or the like. The communication unit 509 is configured from a network interface or the like. The drive 510 drives a removable medium 511 such as a magnetic disk, an optical disk, a magneto-optical disk, a semiconductor memory or the like.

In the computer configured as described above, as one example the CPU 501 loads a program recorded in the recording unit 508 via the input/output interface 505 and the bus 504 into the RAM 503 and executes the program to carry out the series of processes described earlier.

As one example, the program executed by the computer (the CPU 501) may be provided by being recorded on the removable medium 511 as a packaged medium or the like. The program can also be provided via a wired or wireless transfer medium, such as a local area network, the Internet, or a digital satellite broadcast.

In the computer, by loading the removable medium 511 into the drive 510, the program can be installed into the recording unit 508 via the input/output interface 505. It is also possible to receive the program from a wired or wireless transfer medium using the communication unit 509 and install the program into the recording unit 508. As another alternative, the program can be installed in advance into the ROM 502 or the recording unit 508.

Note that the program executed by the computer may be a program in which processes are carried out in a time series in the order described in this specification or may be a program in which processes are carried out in parallel or at necessary timing, such as when the processes are called.

An embodiment of the disclosure is not limited to the embodiments described above, and various changes and modifications may be made without departing from the scope of the disclosure.

For example, the present disclosure can adopt a configuration of cloud computing which processes by allocating and connecting one function by a plurality of apparatuses through a network.

Further, each step described by the above-mentioned flow charts can be executed by one apparatus or by allocating a plurality of apparatuses.

In addition, in the case where a plurality of processes are included in one step, the plurality of processes included in this one step can be executed by one apparatus or by sharing a plurality of apparatuses.

In addition, the effects described in the present specification are not limiting but are merely examples, and there may be additional effects.

### Reference Signs List

- 11: imaging apparatus
- 21: optical unit
- 22: image sensor
- 29: controller
- 51: image segmentation unit
- 52: captured-image processing unit
- 53: range-image processing unit
- 57: passive mode AF calculator
- 58: active mode AF calculator
- 59: AF mode determination unit
- 60: light emission control unit

## Claims

1. An imaging apparatus (11) comprising:
an image sensor (22) configured to capture an image;
a detector (52) configured to detect a luminance level of a shooting environment from the captured image; and
a mode determination unit (59) configured to compare the luminance level with a predetermined threshold to select any one of autofocusing using a passive mode or autofocusing using an active mode;
a passive mode calculator (57) configured to calculate a shift amount of a lens in the autofocusing using the passive mode;
an active mode calculator (58) configured to calculate a shift amount of the lens in the autofocusing using the active mode; and
wherein the imaging apparatus (11) is configured
to calculate the defocus amount using both the passive mode and the active mode,
and to select the defocus amount calculated using any one of the passive mode or the active mode as appropriate depending on the result obtained by the mode determination unit (59).

2. The imaging apparatus according to claim 1, further comprising:
a calculator configured to calculate a shift amount of a lens in autofocusing using a mode selected by the mode determination unit.

3. The imaging apparatus according to claim 1,
wherein the detector calculates, as the luminance level, an average luminance of a captured image obtained by shooting a subject or an average luminance of a region in the captured image that includes the subject to be shot, based on the captured image.

4. The imaging apparatus according to claim 3,
wherein the mode determination unit selects the autofocus using the passive mode when the luminance level is larger than the threshold, and selects the autofocus using the active mode when the luminance level is less than or equal to the threshold.

5. The imaging apparatus according to claim 3, further comprising:
a light emitting unit configured to irradiate the subject with irradiation light; and
a range-image processing unit configured to detect light reception timing of the irradiation light based on a range image obtained by receiving the irradiation light reflected from the subject,
wherein the active mode calculator calculates a shift amount of the lens using the active mode based on light emission timing of the irradiation light and the light reception timing.

6. The imaging apparatus according to claim 3,
wherein the passive mode calculator calculates a shift amount of the lens using the passive mode based on the captured image.

7. The imaging apparatus according to claim 3,
wherein the detector detects the luminance level for each frame of the captured image.

8. An imaging method comprising steps of:
detecting a luminance level of a shooting environment from a captured image captured by an iamge sensor;
comparing the luminance level with a predetermined threshold to select any one of autofocusing using a passive mode or autofocusing using an active mode;
calculating a shift amount of a lens into the autofocusing using the passive mode;
calculating a shift amount of a lens in the autofocusing using the active mode;
calculating the defocus amount using both the passive mode and the active mode,
and selecting the defocus amount calculated using any one of the passive mode or the active mode as appropriate depending on the result of the comparison.

9. A program for causing a computer to execute a process according to claim 8.

## Patentansprüche

1. Bildgebungsvorrichtung (11), umfassend:
einen Bildsensor (22), der konfiguriert ist zum Erfassen eines Bildes;
einen Detektor (52), der konfiguriert ist zum Erkennen eines Luminanzpegels einer Aufnahmeumgebung aus dem erfassten Bild; und
eine Modusermittlungseinheit (59), die konfiguriert ist zum Vergleichen des Luminanzpegels mit einem vorbestimmten Schwellenwert, entweder um eine Autofokussierung mithilfe eines passiven Modus oder eine Autofokussierung mithilfe eines aktiven Modus auszuwählen;
einen Rechner für den passiven Modus (57), der konfiguriert ist zum Berechnen einer Verschiebungsgröße einer Linse bei der Autofokussierung mithilfe des passiven Modus;
einen Rechner für den aktiven Modus (58), der konfiguriert ist zum Berechnen einer Verschiebungsgröße der Linse bei der Autofokussierung mithilfe des aktiven Modus; und
wobei die Bildgebungsvorrichtung (11) konfiguriert ist zum Berechnen der Defokussierungsgröße mithilfe sowohl des passiven Modus als auch des aktiven Modus, und zum Auswählen der Defokussierungsgröße, die mithilfe entweder des passiven Modus oder des aktiven Modus berechnet wird, wie es abhängig von dem Ergebnis angemessen ist, das durch die Modusermittlungseinheit (59) erhalten wird.

2. Bildgebungsvorrichtung nach Anspruch 1, die außerdem umfasst:
einen Rechner, der konfiguriert ist zum Berechnen einer Verschiebungsgröße einer Linse bei einer Autofokussierung mithilfe eines Modus, der durch die Modusermittlungseinheit ausgewählt wird.

3. Bildgebungsvorrichtung nach Anspruch 1,
wobei der Detektor aufgrund eines erfassten Bildes den Luminanzpegel als eine durchschnittliche Luminanz des erfassten Bildes, das durch die Aufnahme eines Gegenstands erhalten wurde, oder als eine durchschnittlichen Luminanz eines Bereichs in dem erfassten Bild berechnet, das den aufzunehmenden Gegenstand enthält.

4. Bildgebungsvorrichtung nach Anspruch 3,
wobei die Modusermittlungseinheit die Autofokussierung mithilfe des passiven Modus auswählt, wenn der Luminanzpegel größer als der Schwellenwert ist, und die Autofokussierung mithilfe des aktiven Modus auswählt, wenn der Luminanzpegel kleiner als der oder gleich dem Schwellenwert ist.

5. Bildgebungsvorrichtung nach Anspruch 3, die außerdem umfasst:
eine lichtemittierende Einheit, die konfiguriert ist zum Bestrahlen des Gegenstands mit einem Bestrahlungslicht; und
eine Bereichsbildverarbeitungseinheit, die konfiguriert ist zum Erkennen eines Lichtempfangszeitpunkts des Bestrahlungslichts aufgrund eines Bereichsbildes, das erhalten wird, indem das von dem Gegenstand reflektierte Bestrahlungslicht empfangen wird,
wobei der Rechner für den aktiven Modus eine Verschiebungsgröße der Linse mithilfe des aktiven Modus aufgrund eines Lichtemissionszeitpunkts des Bestrahlungslichts und eines Lichtempfangszeitpunkts berechnet.

6. Bildgebungsvorrichtung nach Anspruch 3,
wobei der Rechner für den passiven Modus eine Verschiebungsgröße der Linse mithilfe des passiven Modus aufgrund des erfassten Bildes berechnet.

7. Bildgebungsvorrichtung nach Anspruch 3,
wobei der Detektor den Luminanzpegel für jedes Einzelbild des erfassten Bildes erkennt.

8. Bildgebungsverfahren, das die folgenden Schritte umfasst:
Erkennen eines Luminanzpegels einer Aufnahmeumgebung aus einem erfassten Bild, das mit einem Bildsensor erfasst wurde;
Vergleichen des Luminanzpegels mit einem vorbestimmten Schwellenwert, entweder um eine Autofokussierung mithilfe eines passiven Modus oder eine Autofokussierung mithilfe eines aktiven Modus auszuwählen;
Berechnen einer Verschiebungsgröße einer Linse bei der Autofokussierung mithilfe des passiven Modus;
Berechnen einer Verschiebungsgröße einer Linse bei der Autofokussierung mithilfe des aktiven Modus;
Berechnen der Defokussierungsgröße mithilfe sowohl des passiven Modus als auch des aktiven Modus, und
Auswählen der Defokussierungsgröße, die mithilfe entweder des passiven Modus oder des aktiven Modus berechnet wird, wie es abhängig von dem Ergebnis des Vergleichs angemessen ist.

9. Programm zum Veranlassen eines Computers, das Verfahren nach Anspruch 8 auszuführen.

## Revendications

1. Appareil d'imagerie (11) comprenant :
un capteur d'image (22) configuré pour capturer une image ;
un détecteur (52) configuré pour détecter un niveau de luminance d'un environnement de prise de vue à partir de l'image capturée ; et
une unité de détermination de mode (59) configurée pour comparer le niveau de luminance à un seuil prédéterminé afin de sélectionner l'un quelconque de l'autofocus utilisant un mode passif ou de l'autofocus utilisant un mode actif ;
un calculateur de mode passif (57) configuré pour calculer une quantité de décalage d'un objectif en autofocus utilisant le mode passif ;
un calculateur de mode actif (58) configuré pour calculer une quantité de décalage de l'objectif en autofocus utilisant le mode actif ; et
où l'appareil d'imagerie (11) est configuré pour calculer la quantité de défocalisation en utilisant à la fois le mode passif et le mode actif, et pour sélectionner la quantité de défocalisation calculée en utilisant l'un quelconque du mode passif ou du mode actif, comme approprié selon le résultat obtenu par l'unité de détermination de mode (59).

2. Appareil d'imagerie selon la revendication 1, comprenant en outre :
un calculateur configuré pour calculer une quantité de décalage d'un objectif en autofocus utilisant un mode sélectionné par l'unité de détermination de mode.

3. Appareil d'imagerie selon la revendication 1,
dans lequel le détecteur calcule, en tant que niveau de luminance, une luminance moyenne d'une image capturée obtenue en photographiant un sujet ou une luminance moyenne d'une région dans l'image capturée qui comprend le sujet à photographier, sur la base de l'image capturée.

4. Appareil d'imagerie selon la revendication 3,
dans lequel l'unité de détermination de mode sélectionne l'autofocus utilisant le mode passif lorsque le niveau de luminance est supérieur au seuil,
et sélectionne l'autofocus utilisant le mode actif lorsque le niveau de luminance est inférieur ou égal au seuil.

5. Appareil d'imagerie selon la revendication 3, comprenant en outre :
une unité d'émission de lumière configurée pour irradier le sujet avec de la lumière d'irradiation ; et
une unité de traitement d'image de distance configurée pour détecter le temps de réception de lumière de la lumière d'irradiation sur la base d'une image de distance obtenue en recevant la lumière d'irradiation réfléchie par le sujet,
où le calculateur de mode actif calcule une quantité de décalage de l'objectif utilisant le mode actif sur la base du temps d'émission de lumière de la lumière d'irradiation et du temps de réception de lumière.

6. Appareil d'imagerie selon la revendication 3,
dans lequel le calculateur de mode passif calcule une quantité de décalage de l'objectif utilisant le mode passif sur la base de l'image capturée.

7. Appareil d'imagerie selon la revendication 3,
dans lequel le détecteur détecte le niveau de luminance pour chaque trame de l'image capturée.

8. Procédé d'imagerie comprenant les étapes suivantes :
détecter un niveau de luminance d'un environnement de prise de vue à partir d'une image capturée, capturée par un capteur d'image ;
comparer le niveau de luminance à un seuil prédéterminé pour sélectionner l'un quelconque de l'autofocus utilisant un mode passif ou de l'autofocus utilisant un mode actif ;
calculer une quantité de décalage d'un objectif en autofocus utilisant le mode passif ;
calculer une quantité de décalage d'un objectif en autofocus utilisant le mode actif ;
calculer la quantité de défocalisation en utilisant à la fois le mode passif et le mode actif, et
sélectionner la quantité de défocalisation calculée en utilisant l'un quelconque du mode passif ou du mode actif, comme approprié selon le résultat de la comparaison.

9. Programme pour amener un ordinateur à exécuter un processus selon la revendication 8.
